# EUROPÄISCHE PATENTSCHRIFT

(11) **EP 2 684 070 B1**
(45) Veröffentlichungstag und Bekanntmachung des Hinweises auf die Patenterteilung: **28.09.2016**
(21) Anmeldenummer: 12707088.6
(22) Anmeldetag: 01.03.2012
(51) Int. Cl.: G01S 15/93, G01S 15/87, G08G 1/14, G01S 7/52

(54) **VERFAHREN ZUM DETEKTIEREN EINER PARKLÜCKE, PARKHILFESYSTEM UND KRAFTFAHRZEUG MIT EINEM PARKHILFESYSTEM**
METHOD FOR DETECTING A PARKING SPACE, PARKING ASSIST SYSTEM AND MOTOR VEHICLE COMPRISING A PARKING ASSIST SYSTEM
PROCÉDÉ POUR DÉTECTER UNE PLACE DE STATIONNEMENT, SYSTÈME D'AIDE AU STATIONNEMENT ET VÉHICULE AUTOMOBILE POURVU D'UN SYSTÈME D'AIDE AU STATIONNEMENT

(30) Priorität: 11.03.2011 DE 102011013681
(43) Veröffentlichungstag der Anmeldung: 15.01.2014
(73) Patentinhaber: Valeo Schalter und Sensoren GmbH, 74321 Bietigheim-Bissingen (DE)
(72) Erfinder: BARTH, Harald, 70825 Korntal-Muenchingen (DE)
(86) Internationale Anmeldenummer: PCT/EP2012/053535
(87) Internationale Veröffentlichungsnummer: WO 2012/123263

(56) Entgegenhaltungen:
- EP-A1- 1 475 648
- DE-A1-102005 046 054
- DE-A1-102008 004 632

## Beschreibung

Die Erfindung betrifft ein Verfahren zum Detektieren bzw. Erfassen einer Parklücke mittels eines Parkhilfesystems eines Kraftfahrzeugs während einer Vorbeifahrt des Kraftfahrzeugs an der Parklücke. Während der Vorbeifahrt erfasst ein erster Sensor eine zeitliche Abfolge bzw. Reihe von Messwerten; ein in einem Abstand zum ersten Sensor angeordneter zweiter Sensor des Parkhilfesystems erfasst während der Vorbeifahrt ebenfalls eine zeitliche Abfolge bzw. Sequenz von Messwerten. Die Parklücke wird anhand der Messwerte zumindest eines der Sensoren detektiert. Die Erfindung betrifft außerdem ein Parkhilfesystem, welches zum Durchführen eines derartigen Verfahrens ausgebildet ist, wie auch ein Kraftfahrzeug mit einem solchen Parkhilfesystem.

Parkhilfesysteme für Kraftfahrzeuge sind Stand der Technik. Sie dienen zum Erfassen einer Parklücke, in welche das Kraftfahrzeug dann - z. B. automatisch oder halbautomatisch - eingeparkt werden kann. Zur Erfassung der Parklücke werden in der Regel Ultraschallsensoren eingesetzt, die im vorderen Bereich des Kraftfahrzeugs an den beiden Seitenflanken angebracht sind. Während der Vorbeifahrt des Kraftfahrzeugs an einer Parklücke misst der an der Seitenflanke - etwa im Randbereich des vorderen Stoßfängers - angeordnete Ultraschallsensor fortlaufend den seitlichen Abstand des Kraftfahrzeugs zu fahrzeugexternen Hindernissen. Anhand des Verlaufs der Messwerte des Ultraschallsensors, wie auch unter Berücksichtigung des zurückgelegten Weges, können dann die Abmessungen der Parklücke sowie die relative Position der Parklücke bezüglich des Kraftfahrzeugs bestimmt werden. Dies gilt sowohl für Längsparklücken, deren Längsachse im Wesentlichen parallel zur Fahrbahn orientiert ist, als auch für Querparklücken, deren Längsachse senkrecht oder in einem spitzen Winkel zur Fahrbahn verläuft.

Ein derartiges Detektionsverfahren ist beispielsweise aus dem Dokument

EP 0 305 907 B1 bekannt. Eine in dieser Druckschrift beschriebene Einparkhilfevorrichtung umfasst einen Ultraschallsensor, welcher an einem Eckpunkt des Kraftfahrzeugs angeordnet ist. Anstelle nur eines Ultraschallsensors können auch zwei derartige Ultraschallsensoren eingesetzt werden, nämlich beispielsweise an dem vorderen und dem hinteren seitlichen Eckpunkt des Kraftfahrzeugs. Somit ist es möglich, eine Aussage über die Größe der Parklücke ohne Bezug zur Eigenlänge des Kraftfahrzeugs zu gewinnen. Eine ausreichende Größe der Parklücke liegt nämlich dann vor, wenn zunächst der hintere Sensor den Beginn der Parklücke detektiert und erst danach bzw. anschließend der vordere Sensor das Ende derselben Parklücke erfasst. Ebenfalls aus der Druckschrift EP 1 486 797 A1 ist der Einsatz von zwei Ultraschallsensoren zur Vermessung einer Parklücke bekannt. Ein erster Ultraschallsensor befindet sich im vorderen Eckbereich des Kraftfahrzeugs, während ein zweiter Ultraschallsensor im hinteren Eckbereich derselben Fahrzeugseite angeordnet ist. Es wird die Länge einer zwischen zwei anderen Fahrzeugen liegenden Längsparklücke ermittelt, nämlich in Abhängigkeit von den Messwerten beider Ultraschallsensoren. Der erste Sensor misst zunächst den seitlichen Abstand zwischen dem eigenen Kraftfahrzeug und dem ersten Fahrzeug, welches die Parklücke von hinten begrenzt. Passiert das eigene Kraftfahrzeug dieses erste Fahrzeug, so misst der vordere Ultraschallsensor den direkten Abstand zu einem zweiten Fahrzeug, welches die Parklücke von vorne begrenzt, während der hintere Ultraschallsensor den direkten Abstand zum ersten bzw. hinteren Fahrzeug misst. In Abhängigkeit von diesen direkten Abständen, wie auch unter Berücksichtigung des zuvor gemessenen seitlichen Abstandes, werden dann die relative Position des Kraftfahrzeugs bezüglich der Parklücke sowie die Länge der Parklücke ermittelt.

Auch die Druckschrift DE 10 2004 047 485 A1 beschreibt ein Verfahren zur Vermessung einer Parklücke mithilfe von zwei Ultraschallsensoren eines Kraftfahrzeugs, wobei sowohl ein vorderer als auch ein hinterer Sensor verwendet werden, die auf derselben Fahrzeugseite angeordnet sind. Der vordere Sensor erfasst eine vordere sowie eine hintere Begrenzung der Längsparklücke und weist eine geringere Reichweite als der hintere Sensor auf. Demgegenüber erfasst der hintere Sensor eine seitliche Begrenzung der Längsparklücke und weist daher eine entsprechend größere Reichweite auf.

Aus der DE 10 2008 004 632 A1 ist ein Verfahren zur Vermessung einer Parklücke bei einer Vorbeifahrt eines Fahrzeugs mittels einer mit dem Fahrzeug mitbeweglichen, tiefenmessenden Zeilenkamera bekannt, so dass die Einzelbilder in einer vertikalen Richtung aufkösbare Tiefeninformationen enthalten. Es wird ferner vorgeschlagen, mehrere Zeilenkameras, insbesondere eine im vorderen Bereich und eine im hinteren Bereich des Fahrzeugs anzuordnen.

Aus der EP 1 475 648 sind eine Einrichtung und ein Verfahren zur Vermessung von Parklücken mit berührungslosen Abstandssensoren bekannt. Zur Vermessung der Parklücke sind Abstandsensoren jeweils an den vorderen und hinteren Eckbereichen des Fahrzeugs vorgesehen.

Aus der DE 10 2005 046 054 A1 sind ebenfalls eine Verfahren und eine Vorrichtung zur Vermessung einer Parklücke bei einer Vorbeifahrt eines Fahrzeugs über abstandsmessende Sensoren bekannt. Dabei ist ein erster Sensor an einem vorderen Eckbereich und ein zweite Sensor an einem hinteren Eckbereich des Fahrzeugs angeordnet, wobei die Empfindlichkeit des zweiten Sensore in Abhängigkeit vom Messergebnis des ersten Sensor eingestellt wird.

Also können im Stand der Technik zwei Ultraschallsensoren zur Erfassung bzw. Detektion einer Parklücke eingesetzt werden. Für die Vermessung der Parklücke werden dabei sowohl die Messwerte des ersten Sensors als auch die Messwerte des zweiten Sensors unmittelbar verwendet. Liefert einer der Sensoren ungenaue oder gar keine Messwerte - etwa aufgrund einer geringen Empfindlichkeit - oder fällt einer der Sensoren aus, so ist die Erfassung der Parklücke nicht mehr möglich.

Es ist Aufgabe der Erfindung, einen Weg aufzuzeigen, wie bei einem Verfahren der eingangs genannten Gattung die Parklücke besonders zuverlässig detektiert, und insbesondere auch vermessen, werden kann.

Diese Aufgabe wird erfindungsgemäß durch ein Verfahren mit den Merkmalen des Patentanspruchs 1, durch ein Parkhilfesystem mit den Merkmalen gemäß Patentanspruch8, wie auch durch ein Kraftfahrzeug mit den Merkmalen gemäß Patentanspruch 9 gelöst. Vorteilhafte Ausführungen der Erfindung sind Gegenstand der abhängigen Patentansprüche, der Beschreibung und der Figuren.

Ein erfindungsgemäßes Verfahren ist zum Detektieren einer Parklücke mittels eines Parkhilfesystems eines Kraftfahrzeugs während einer Vorbeifahrt des Kraftfahrzeugs an der Parklücke aufgelegt. Es wird eine zeitliche Abfolge von Messwerten durch einen ersten Sensor des Parkhilfesystems während der Vorbeifahrt erfasst. Auch ein in einem Abstand zum ersten Sensor angeordneter zweiter Sensor erfasst während dieser Vorbeifahrt eine zeitliche Abfolge bzw. Reihe von Messwerten. Die Parklücke wird anhand der Messwerte zumindest eines der Sensoren detektiert bzw. erfasst. Für die Detektion der Parklücke werden die Messwerte des ersten Sensors und die Messwerte des zweiten Sensors redundant erfasst, sodass anhand der Messwerte des zweiten Sensors die zeitliche Abfolge der Messwerte des ersten Sensors auf ihre Plausibilität hin überprüft wird.

Ein Kerngedanke der Erfindung besteht somit mit anderen Worten darin, dass die Parklücke bei der Vorbeifahrt des Kraftfahrzeugs redundant durch zwei separate Sensoren erfasst wird, welche insbesondere an derselben Seitenflanke des Kraftfahrzeugs angeordnet sind. Die Abfolge der Messwerte des ersten Sensors wird mit der Abfolge der Messwerte des zweiten Sensors verglichen und somit plausibilisiert. Auf diesem Wege gelingt es, die Parklücke besonders zuverlässig zu detektieren. Fällt der erste Sensor aus oder liefert dieser Sensor unplausible Messwerte, so kann die Parklücke nämlich anhand der Messwerte des zweiten Sensors detektiert oder aber die Abfolge der Messwerte des ersten Sensors durch Messwerte der Abfolge des zweiten Sensors ergänzt werden. Es können also Lücken in der Messreihe eines der Sensoren durch die entsprechenden bzw. räumlich zugeordneten Messwerte des anderen Sensors ergänzt werden.

Bevorzugt ist der erste Sensor ein vorderer Sensor, welcher in einem vorderen Bereich des Kraftfahrzeugs, insbesondere an einer Seitenflanke, angeordnet ist. Also kann der vordere Sensor in einem Eckbereich des Kraftfahrzeugs angebracht sein, etwa im vorderen Bereich der Seitenflanke. Dann erfasst der vordere Sensor den Umgebungsbereich seitlich neben dem Kraftfahrzeug, und es können Parklücken detektiert werden, die sich seitlich neben dem Kraftfahrzeug befinden. Demgegenüber ist der zweite Sensor bevorzugt ein hinterer Sensor, welcher in einem hinteren Bereich des Kraftfahrzeugs, insbesondere an derselben Seitenflanke angeordnet ist. Der hintere Sensor kann also in einem hinteren Eckbereich des Kraftfahrzeugs angebracht sein, etwa im hinteren Bereich einer Seitenflanke. Auch mit dem zweiten Sensor können somit Parklücken erfasst werden, die sich seitlich neben dem Kraftfahrzeug befinden. Vorzugsweise werden zwei erste Sensoren, nämlich gegenüberliegend an der linken Seitenflanke einerseits und an der rechten Seitenflanke andererseits jeweils im vorderen Bereich des Kraftfahrzeugs, sowie zwei hintere Sensoren eingesetzt, nämlich gegenüberliegend sowohl an der linken als auch an der rechten Seitenflanke im hinteren Bereich des Kraftfahrzeugs. Somit werden Parklücken sowohl auf der rechten als auch auf der linken Seite des Kraftfahrzeugs detektiert.

Sind der erste Sensor ein vorderer Sensor und der zweite Sensor ein hinterer Sensor, so werden anhand der Messwerte des hinteren Sensors die Messwerte des vorderen Sensors auf ihre Plausibilität hin überprüft. Mit dem vorderen Sensor kann die Parklücke nämlich deutlich schneller als mit dem hinteren Sensor erfasst werden, und diese Detektion kann dann anhand der Messwerte des hinteren Sensors plausibilisiert werden.

Der zweite Sensor ist in einem Abstand zum ersten Sensor angeordnet. Während der Vorbeifahrt des Kraftfahrzeugs an der Parklücke erfassen somit die Sensoren jeweilige Abfolgen bzw. Sequenzen von Messwerten, welche im Wesentlichen gleiche Form bzw. gleichen Verlauf aufweisen, jedoch aufgrund des Abstandes zwischen den Sensoren relativ zueinander (zeitlich) versetzt sind. Aufgrund dieses Versatzes der jeweiligen Abfolgen der Messwerte der beiden Sensoren gilt, dass zwei zu ein- und demselben Zeitpunkt erfasste Messwerte des ersten Sensors einerseits und des zweiten Sensors andererseits miteinander nicht verglichen werden können. Erfindungsgemäß wird folgende Zuordnung vorgenommen: Für die Plausibilitätsprüfung werden die Messwerte der Abfolge des ersten Sensors entsprechenden Messwerten der Abfolge des zweiten Sensors paarweise in der Weise zugeordnet, dass die einander zugeordneten Messwerte sich auf Messungen zu ein und demselben Raumpunkt beziehen. Die einander zugeordneten Messwerte charakterisieren somit insbesondere den Abstand des Kraftfahrzeugs zu ein und demselben Raumpunkt bzw. ein und derselben Flächeneinheit eines Hindernisses. Die einander zugeordneten Messwerte sind also diejenigen Messwerte des ersten Sensors einerseits und des zweiten Sensors andererseits, welche im Wesentlichen an ein und derselben Stelle bzw. in ein und derselben Position der Sensoren, jedoch zeitlich nacheinander aufgenommen wurden. Durch eine derartige Zuordnung der Messwerte der Abfolge des ersten Sensors zu den Messwerten der Abfolge des zweiten Sensors kann die Abfolge des ersten Sensors ohne viel Aufwand plausibilisiert werden, nämlich durch einen einfachen Vergleich der Messwerte.

Die genannte Zuordnung der Messwerte kann in Abhängigkeit von einem Abstand zwischen den beiden Sensoren in Fahrzeuglängsrichtung und/oder in Abhängigkeit von einem bei der Vorbeifahrt zurückgelegten Fahrweg des Kraftfahrzeugs erfolgen. Dieser Fahrweg kann mithilfe eines Wegsensors gemessen werden. Ist der Abstand zwischen den Sensoren in Längsrichtung und/oder der zurückgelegte Fahrweg bekannt, so kann der Versatz zwischen den Signalen bzw. den Abfolgen der Messwerte der beiden Sensoren zuverlässig und mit hoher Genauigkeit ermittelt werden, sodass auch die Zuordnung der jeweiligen Messwerte zueinander besonders präzise erfolgen kann.

Bei einem Ultraschallsensor wird bekanntlich ein Sendesignal ausgesendet und ein von einem Hindernis reflektiertes Signal empfangen. Das reflektierte Signal wird auch als "Echo" bezeichnet. Die Amplitude des empfangenen Signals wird dann in der Regel mit einem Schwellwert verglichen, und es wird überprüft, ob diese Amplitude größer als der vorbestimmte Schwellwert ist oder nicht. Eine größere Amplitude wird als eine Detektion gewertet, und es liegt ein entsprechender Messwert vor, welcher beispielsweise den Abstand zum Hindernis charakterisiert. Dieser Abstand bzw. Messwert kann aus einer Laufzeit des Signals ermittelt werden. Ist hingegen die Amplitude des empfangen Signals kleiner als der genannte Schwellwert, so liegt keine Detektion und somit kein Messwert vor. Es kann auch vorkommen, dass die Amplitude des empfangenen Signals relativ gering ist und aufgrund des Rauschens nicht eindeutig gemessen werden kann. In diesem Falle liegt ebenfalls kein Messwert vor, jedoch kann das empfangene Signal weiterhin gefiltert werden, um dann gegebenenfalls doch eine Auswertung der Amplitude zu gewährleisten.

Es kann also vorkommen, dass in der Abfolge der Messwerte einer der Sensoren einige Messwerte fehlen, obwohl ein Hindernis tatsächlich detektiert werden soll. Die Messwerte können beispielsweise aufgrund einer geringeren Empfindlichkeit des Sensors fehlen. Ganz allgemein kann aus diesem Grund vorgesehen sein, dass die zeitliche Abfolge der Messwerte des ersten Sensors durch Messwerte aus der zeitlichen Abfolge des zweiten Sensors ergänzt wird. Auf diesem Wege gelingt es, eine vollständige Abfolge der Messwerte zu bekommen, was die Präzision bei der Detektion - insbesondere bei der Vermessung - der Parklücke deutlich erhöht.

Es kann auch vorgesehen sein, dass die Abfolge von Messwerten des ersten Sensors einer besonderen Filterung unterzogen wird, nämlich dann, wenn festgestellt wird, dass bei dieser Abfolge bestimmte Messwerte fehlen und die Abfolge der Messwerte des zweiten Sensors an denselben Stellen doch erfassbare Messwerte beinhaltet.

Folgende Vorgehensweise erweist sich als besonders vorteilhaft: Es wird überprüft, ob in der Abfolge des ersten Sensors Messwerte fehlen oder nicht. Bei Fehlen eines Messwertes wird überprüft, ob in der Abfolge des zweiten Sensors ein entsprechender bzw. zugeordneter Messwert vorhanden ist oder nicht. Ist der korrespondierende Messwert in der Abfolge des zweiten Sensors vorhanden, so wird die Abfolge des ersten Sensors um diesen Messwert ergänzt. Ist hingegen der entsprechende Messwert in der Abfolge des zweiten Sensors ebenfalls nicht vorhanden, so wird die Abfolge des ersten Sensors bezüglich des fehlenden Messwertes als plausibel angenommen bzw. bestätigt. Es wird also überprüft, ob die zeitliche Abfolge der Messwerte des ersten Sensors plausibel ist oder nicht, und zwar anhand der zeitlichen Abfolge des zweiten Sensors. Die Parklücke kann dann anhand der - gegebenenfalls ergänzten - zeitlichen Abfolge der Messwerte des ersten Sensors detektiert, insbesondere vermessen werden. Auf diese Weise wird die Wahrscheinlichkeit eines Fehlers bei der Detektion der Parklücke auf ein Minimum reduziert.

Die Detektion der Parklücke beinhaltet vorzugsweise, dass die Parklücke vermessen wird. Insbesondere wird/werden eine Länge und/oder eine Breite der Parklücke anhand der plausibilisierten Abfolge der Messwerte des ersten Sensors bestimmt. Wird die Parklücke vermessen, so können ihre Abmessungen mit den abgelegten Abmessungen des Kraftfahrzeugs verglichen werden, und es kann überprüft werden, ob das Kraftfahrzeug in diese Parklücke eingeparkt werden kann oder nicht. Bei der Vermessung der Parklücke wird bevorzugt auch der während der Vorbeifahrt zurückgelegte Fahrweg des Kraftfahrzeugs berücksichtigt.

Es werden vorzugsweise Ultraschallsensoren verwendet, durch welche die jeweiligen Abfolgen der Messwerte erfasst werden. Die Messwerte charakterisieren insbesondere Abstände zwischen den jeweiligen Sensoren einerseits und fahrzeugexternen Hindernissen andererseits, welche die Parklücke begrenzen. Die Sensoren weisen bevorzugt jeweils einen relativ schmalen Erfassungswinkel bzw. Erfassungsbereich auf, sodass eine relativ große räumliche Auflösung der Messwerte gewährleistet ist und der Beginn und das Ende der Parklücke eindeutig identifiziert werden können.

Erfindungsgemäß wird darüber hinaus ein Parkhilfesystem für ein Kraftfahrzeug bereitgestellt, welches zum Detektieren einer Parklücke während einer Vorbeifahrt des Kraftfahrzeugs an der Parklücke ausgebildet ist. Es beinhaltet einen ersten Sensor zum Erfassen einer zeitlichen Abfolge von Messwerten, wie auch einen in einem Abstand zum am ersten Sensor angeordneten zweiten Sensor, welcher ebenfalls zum Erfassen einer zeitlichen Abfolge von Messwerten ausgebildet ist. Es sind Detektionsmittel bereitgestellt, welche die Parklücke anhand der Messwerte zumindest eines der Sensoren detektieren. Für die Detektion der Parklücke werden die Messwerte des ersten Sensors und die Messwerte des zweiten Sensors redundant erfasst, wobei das Parkhilfesystem auch Prüfmittel aufweist, welche anhand der Messwerte des zweiten Sensors die zeitliche Abfolge der Messwerte des ersten Sensors auf ihre Plausibilität hin überprüfen.

Ein erfindungsgemäßes Kraftfahrzeug umfasst ein erfindungsgemäßes Parkhilfesystem.

Die mit Bezug auf das erfindungsgemäße Verfahren vorgestellten bevorzugten Ausführungsformen und deren Vorteile gelten entsprechend für das erfindungsgemäße Parkhilfesystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombination sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug mit einem Parkhilfesystem gemäß einer Ausführungsform der Erfindung, wobei ein Verfahren gemäß einer Ausführungsform der Erfindung näher erläutert wird; und
- Fig. 2A bis 2C: jeweils zeitliche Abfolgen von Messwerten eines ersten Sensors und eines zweiten Sensors, wobei ein Verfahren gemäß einer Ausführungsform der Erfindung näher erläutert wird.

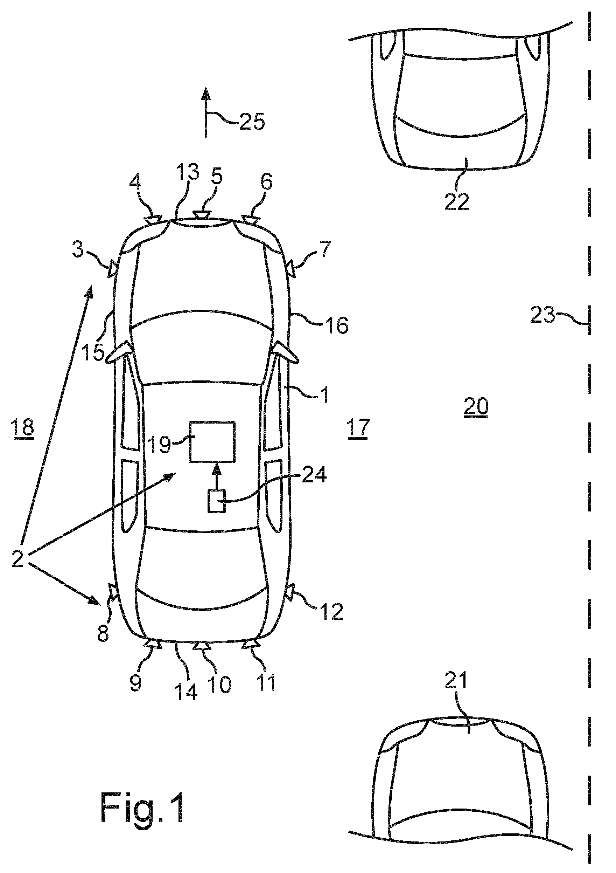

Ein in Fig. 1 dargestelltes Kraftfahrzeug 1 gemäß einer Ausführungsform der Erfindung ist z. B. ein Personenkraftwagen. Das Kraftfahrzeug 1 umfasst ein Parkhilfesystem 2, welches zum Unterstützen eines Fahrers des Kraftfahrzeugs 1 beim Einparken in eine Parklücke dient. Das Parkhilfesystem 2 umfasst eine Vielzahl von Ultraschallsensoren 3 bis 12, welche an einem vorderen Stoßfänger 13 sowie einem hinteren Stoßfänger 14 verteilt angeordnet sind.

Beispielsweise sind fünf Ultraschallsensoren 3 bis 7 am vorderen Stoßfänger 13 angebracht, wie auch fünf Sensoren 8 bis 12 am hinteren Stoßfänger 14. Der Ultraschallsensor 3 befindet sich dabei in einem linken Eckbereich bzw. Randbereich des vorderen Stoßfängers 13 und somit im linken Eckbereich des Kraftfahrzeugs 1, nämlich an einer linken Seitenflanke 15. Demgegenüber ist der Ultraschallsensor 7 symmetrisch an einer rechten Seitenflanke 16 des Kraftfahrzeugs 1 angebracht, nämlich im vorderen Eckbereich des Kraftfahrzeugs 1. Entsprechend sind die Ultraschallsensoren 8 und 12 im hinteren Bereich des Kraftfahrzeugs 1 angeordnet, nämlich an der linken Seitenflanke 15 einerseits sowie an der rechten Seitenflanke 16 andererseits. Die Ultraschallsensoren 7 und 12 erfassen somit einen Umgehungsbereich 17 rechts neben dem Kraftfahrzeug 1, während die Ultraschallsensoren 3 und 8 einen Umgebungsbereich 18 auf der linken Seite des Kraftfahrzeugs 1 erfassen.

Die Ultraschallsensoren 4, 5, 6 und 9, 10, 11 sind optional vorgesehen.

Zumindest die Ultraschallsensoren 3, 7 und 8, 12 besitzen einen relativ schmalen Erfassungswinkel bzw. Erfassungsbereich in horizontaler Richtung. Dieser Erfassungswinkel kann z. B. in einem Wertebereich von 5°bis 20° liegen. Beispielsweise kann er 15° betragen.

Zum Parkhilfensystem 2 gehört auch eine Steuereinrichtung 19 (Detektionsmittel und Prüfmittel), welche beispielsweise einen Mikrocontroller, einen digitalen Signalprozessor sowie einen Speicher beinhalten kann. Die Steuereinrichtung 19 ist mit den Ultraschallsensoren 3 bis 7 und 8 bis 12 elektrisch gekoppelt. Die Steuereinrichtung 19 empfängt Messwerte von jedem der Sensoren 3 bis 7 und 8 bis 12.

Nachfolgend wird ein Verfahren gemäß einer Ausführungsform der Erfindung näher erläutert. Wenngleich sich die nachfolgende Beschreibung lediglich auf die rechten Sensoren 7 und 12 bezieht, kann das Verfahren selbstverständlich auch für die linken Sensoren 3 und 8 angewandt werden, wenn sich eine Parklücke auf der linken Seite des Kraftfahrzeugs 1 befindet.

Wie bereits ausgeführt, dient das Parkhilfesystem 2 zum Unterstützen des Fahrers beim Einparken in eine Parklücke. Insbesondere können mittels des Parkhilfesystems 2 Parklücken detektiert werden. Nach Erfassen einer Parklücke kann das Parkhilfesystem 2 eine Parkbahn bzw. Trajektorie berechnen, entlang welcher das Kraftfahrzeug 1 dann in die Parklücke automatisch oder aber halbautomatisch eingeparkt werden kann.

Wie in Fig. 1 dargestellt, wird eine Parklücke 20 - in diesem Falle eine Längsparklücke - während einer Vorbeifahrt des Kraftfahrzeugs 1 an dieser Parklücke 20 erfasst. Das Kraftfahrzeug 1 bewegt sich dabei vorwärts, nämlich gemäß der Pfeildarstellung 25. Während der Vorbeifahrt an der Parklücke 20 erfassen die seitlichen Ultraschallsensoren 7 und 12 jeweils eine zeitliche Abfolge bzw. Sequenz von Messwerten. Diese Abfolgen sind aufgrund des Abstands zwischen den Ultraschallsensoren 7, 12 in Fahrzeuglängsrichtung zeitlich relativ zueinander versetzt: Ein die Parklücke 20 von hinten begrenzendes Fahrzeug 21 wird zunächst durch den Ultraschallsensor 7 erfasst und erst dann durch den Ultraschallsensor 12. Entsprechend wird ein die Parklücke 20 von vorne begrenzendes Fahrzeug 22 zunächst mit dem vorderen Ultraschallsensor 7 und erst dann mit dem hinteren Ultraschallsensor 12 erfasst. Der Verlauf bzw. die Form der beiden Abfolgen der Messwerte ist jedoch im Wesentlichen gleich, denn beide Ultraschallsensoren 7, 12 erfassen zunächst das Kraftfahrzeug 21, dann gegebenenfalls einen Bordstein 23 und anschließend das weitere Kraftfahrzeug 22.

Prinzipiell kann die Parklücke 20 alleine anhand der Messwerte des vorderen Ultraschallsensors 7 detektiert und vermessen werden, und zwar auch unter Berücksichtigung eines während der Vorbeifahrt zurückgelegten Fahrweges, welcher mithilfe eines Wegsensors 24 gemessen wird. Der Ultraschallsensor 7 erfasst nämlich sowohl den Beginn der Parklücke 20, welcher durch das Ende des Kraftfahrzeugs 21 definiert ist, als auch das Ende der Parklücke 20, welches mit dem Beginn des weiteren Kraftfahrzeugs 22 zusammenfällt. Wird dies nun mit dem zurückgelegten Fahrweg verknüpft, so kann die Länge der Parklücke 20 - also die Abmessung der Parklücke 20 in Fahrzeuglängsrichtung - ermittelt werden. Prinzipiell ist also alleine der vordere Ultraschallsensor 7 ausreichend. Es kann jedoch vorkommen, dass dieser Ultraschallsensor 7 unplausible Messwerte liefert, nämlich beispielsweise aufgrund einer geringeren Empfindlichkeit. Dies gilt insbesondere in Bezug auf eine seitliche Begrenzung der Parklücke 20, wie beispielsweise in Bezug auf den Bordstein 23. Z. B. kann der vordere Ultraschallsensor 7 keine Messwerte liefern, obwohl tatsächlich doch ein Hindernis im Bereich der Parklücke 20 vorhanden ist.

Um die Abfolge der Messwerte des vorderen Ultraschallsensors 7 zu plausibilisieren, werden nun die Messwerte des hinteren Ultraschallsensors 12 verwendet. Zunächst wird der genannte, aufgrund des Abstandes zwischen den Ultraschallsensoren 7, 12 entstandene Versatz zwischen den beiden Abfolgen der Messwerte des Ultraschallsensors 7 einerseits und des Ultraschallsensors 12 andererseits umgangen, indem eine entsprechende Zuordnung der Messwerte der beiden Abfolgen vorgenommen wird. Und zwar wird den Messwerten der Abfolge des Ultraschallsensors 7 jeweils ein korrespondierender bzw. entsprechender Messwert der Abfolge des Ultraschallsensors 12 zugeordnet. Man bekommt also eine Vielzahl von Paaren, die jeweils einen Messwert der Abfolge des vorderen Ultraschallsensors 7 sowie einen Messwert der Abfolge des Ultraschallsensors 12 beinhalten. Diese Zuordnung erfolgt derart, dass die Messwerte eines jeden Paares sich auf Messungen beziehen, welche im Wesentlichen an ein und derselben Stelle bzw. in ein und derselben Position der beiden Ultraschallsensoren 7, 12 bezüglich der Parklücke 20 durchgeführt wurden. Diese Zuordnung erfolgt in Abhängigkeit von dem Abstand zwischen den beiden Ultraschallsensoren 7, 12, wie auch unter Berücksichtigung des genannten Fahrwegs.

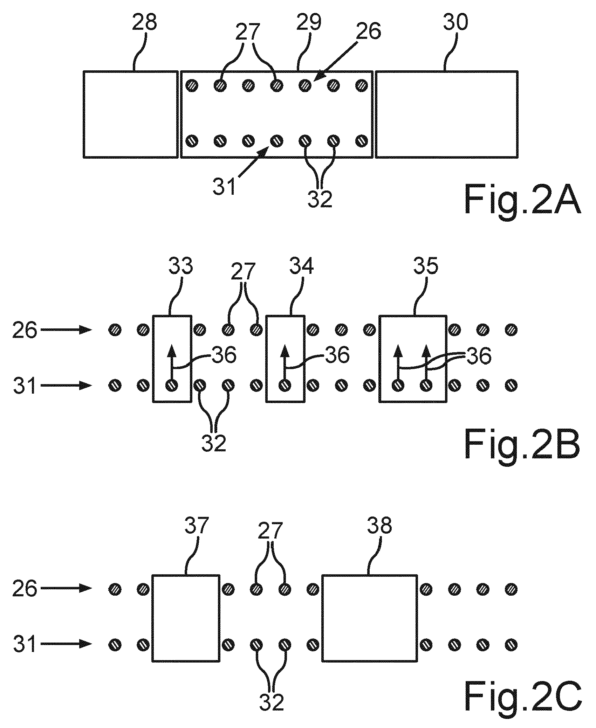

In Fig. 2A ist im oberen Bereich eine beispielhafte zeitliche Abfolge 26 von Messwerten 27 des vorderen Ultraschallsensors 7 dargestellt. Die in Fig. 2 dargestellten Punkte symbolisieren dabei Messwerte der Sensoren 7 bzw. 12, und genauer gesagt das Vorhandensein der Messwerte. Die Messwerte sind dabei in zeitlicher Reihenfolge von links nach rechts dargestellt. Die Abfolge 26 ist in drei Blöcke unterteilt, nämlich einen ersten Block 28, welcher keine Messwerte beinhaltet, einen zweiten Block 29 mit den Messwerten 27, wie auch einen dritten Block 30 ohne Messwerte. Im unteren Bereich ist in Fig. 2A eine zeitliche Abfolge 31 von Messwerten 32 des hinteren Ultraschallsensors 12 symbolisch dargestellt, welche den Messwerten 27 des vorderen Ultraschallsensors 7 in der oben genannten Weise zugeordnet sind. Die Steuereinrichtung 19 stellt fest, dass im Block 28 der vordere Ultraschallsensor 7 überhaupt keine Messwerte liefert und somit keine Detektionen vorliegen. Nun wird die Abfolge 26 des vorderen Ultraschallsensors 7 plausibilisiert: Die Steuereinrichtung 19 überprüft, ob an dieser Stelle - also im Block 28 - die Abfolge 31 des hinteren Ultraschallsensors 12 Messwerte beinhaltet oder nicht. Im Ausführungsbeispiel gemäß Fig. 2a stellt die Steuereinrichtung 19 fest, dass auch die Abfolge 31 des hinteren Ultraschallsensors 12 keine Messwerte im Block 28 umfasst und die Abfolge 26 des vorderen Ultraschallsensors 7 als plausibel angenommen werden kann. Entsprechend können die Echos bzw. die Messwerte 27 im Block 29 als plausibel angenommen und somit bestätigt werden, weil auch die Abfolge 31 des hinteren Ultraschallsensors 12 zugeordnete Messwerte 32 beinhaltet. Gegebenenfalls können hier auch die tatsächlichen Messwerte bzw. Amplituden - also die Abstände - miteinander verglichen werden.

Ein weiteres Beispiel ist in Fig. 2B dargestellt. Hier ist ebenfalls eine beispielhafte Abfolge 26 von Messwerten 27 des vorderen Ultraschallsensors 7 gegenüber einer beispielhaften Abfolge 31 von Messwerten 32 des hinteren Ultraschallsensors 12 dargestellt. Die Steuereinrichtung 19 stellt fest, dass in Blöcken 33, 34 und 35 Messwerte in der Abfolge 26 fehlen. Die Steuereinrichtung 19 überprüft nun, ob an zugeordneten Stellen Messwerte in der Abfolge 31 des hinteren Ultraschallsensors 12 vorhanden sind oder nicht. Im Ausführungsbeispiel gemäß Fig. 2B sind diese Messwerte 32 in den Blöcken 33, 34, 35 vorhanden. In diesem Falle ergänzt die Steuereinrichtung 19 die Abfolge 26 des vorderen Ultraschallsensors 7 durch die Messwerte 32 des hinteren Ultraschallsensors 12, wie in Fig. 2B mithilfe von Pfeilen 36 angedeutet ist.

Ähnlich wie im Ausführungsbeispiel gemäß Fig. 2A sind auch im Ausführungsbeispiel gemäß Fig. 2C in zwei Blöcken 37, 38 keine Messwerte der Abfolge 26 des vorderen Ultraschallsensors 7 vorhanden. Eine Überprüfung durch die Steuereinrichtung 19 ergibt, dass auch an zugeordneten Stellen in der Abfolge 31 des hinteren Ultraschallsensors 12 keine korrespondierenden Messwerte vorhanden sind, sodass die Abfolge 26 der Messwerte 27 als plausibel angenommen wird.

Also wird die zeitliche Abfolge 26 von Messwerten 27 des vorderen Ultraschallsensors 7 mit der zeitlichen Abfolge 31 von Messwerten 32 des hinteren Ultraschallsensors 12 verglichen und so plausibilisiert. Die Erfassung der Begrenzungen der Parklücke 20, insbesondere auch der seitlichen Begrenzung beispielsweise in Form des Bordsteins 23, kann somit besonders präzise und zuverlässig erfolgen. Gegebenenfalls fehlende Messwerte in der Abfolge 26 des vorderen Ultraschallsensors 27 können nämlich durch zugeordnete Messwerte 32 der Abfolge 31 des hinteren Ultraschallsensors 12 ergänzt werden.

## Patentansprüche

1. Verfahren zum Detektieren einer Parklücke (20) mittels eines Parkhilfesystems (2) eines Kraftfahrzeugs (1) während einer Vorbeifahrt des Kraftfahrzeugs (1) an der Parklücke (20), mit den Schritten:
Erfassen einer zeitlichen Abfolge (26) von Messwerten (27) durch einen ersten Sensor (3, 7) des Parkhilfesystems (2) während der Vorbeifahrt, Erfassen einer zeitlichen Abfolge (31) von Messwerten (32) durch einen in einem Abstand zum ersten Sensor (3, 7) angeordneten zweiten Sensor (8, 12) des Parkhilfesystems (2) während der Vorbeifahrt und
Detektieren der Parklücke (20) anhand der Messwerte (27, 32) zumindest eines der Sensoren (3, 7, 8, 12), wobei als Sensoren (3.7, 8, 12) Ultraschallsensoren verwendet werden,
wobei für die Detektion der Parklücke (20) die Messwerte (27) des ersten Sensors (3, 7) und die Messwerte (32) des zweiten Sensors (8, 12) redundant erfasst werden und anhand der Messwerte (32) des zweiten Sensors (8, 12) die zeitliche Abfolge (26) der Messwerte (27) des ersten Sensors (3, 7) auf ihre Plausibilität hin überprüft wird, **dadurch gekennzeichnet, dass** für die Plausibilitätsprüfung die Messwerte (27) der Abfolge (26) des ersten Sensors (3, 7) entsprechenden Messwerten (32) der Abfolge (31) des zweiten Sensors (8, 12) paarweise zugeordnet werden, so dass die einander zugeordneten Messwerte (27, 32) sich auf ein und denselben Raumpunkt beziehen.

2. Verfahren nach Anspruch 1,
**dadurch gekennzeichnet, dass**
als erster Sensor ein vorderer Sensor (3, 7) verwendet wird, welcher in einem vorderen Bereich des Kraftfahrzeugs (1), insbesondere an einer Seitenflanke (16), angeordnet ist.

3. Verfahren nach Anspruch 1 oder 2,
**dadurch gekennzeichnet, dass**
als zweiter Sensor ein hinterer Sensor (8, 12) verwendet wird, welcher in einem hinteren Bereich des Kraftfahrzeugs (1), insbesondere an einer Seitenflanke (16), angeordnet ist.

4. Verfahren nach einem der vorhergehenden Ansprüche,
**dadurch gekennzeichnet, dass**
die Zuordnung der Messwerte (27, 32) in Abhängigkeit von einem Abstand zwischen den Sensoren (7, 12 bzw. 3, 8) in Fahrzeuglängsrichtung und/oder in Abhängigkeit von einem bei der Vorbeifahrt zurückgelegten Fahrweg erfolgt.

5. Verfahren nach einem der vorhergehenden Ansprüche,
**dadurch gekennzeichnet, dass**
die zeitliche Abfolge (26) der Messwerte (27) des ersten Sensors (3, 7) durch Messwerte (32) aus der zeitlichen Abfolge (31) des zweiten Sensors (8, 12) ergänzt wird.

6. Verfahren nach einem der vorhergehenden Ansprüche,
**dadurch gekennzeichnet, dass**
bei Fehlen eines Messwertes (27) in der Abfolge (26) des ersten Sensors (3, 7) überprüft wird, ob in der Abfolge (31) des zweiten Sensors (8, 12) ein entsprechender Messwert (32) erfasst wurde, und:
bei Fehlen des entsprechenden Messwertes (32) in der Abfolge (31) des zweiten Sensors (8, 12) die Abfolge (26) des ersten Sensors (3, 7) als plausibel angenommen wird und
bei Vorhandensein des entsprechenden Messwertes (32) in der Abfolge (31) des zweiten Sensors (8, 12) die Abfolge (26) des ersten Sensors (3, 7) um diesen Messwert (32) ergänzt wird.

7. Verfahren nach einem der vorhergehenden Ansprüche,
**dadurch gekennzeichnet, dass**
das Detektieren der Parklücke (20) beinhaltet, dass die Parklücke (20) vermessen wird, insbesondere eine Länge und/oder eine Breite der Parklücke (20) anhand der Messwerte (27, 32) bestimmt wird.

8. Parkhilfesystem (2) für ein Kraftfahrzeug (1), zum Detektieren einer Parklücke (20) während einer Vorbeifahrt des Kraftfahrzeugs (1) an der Parklücke (20), mit:
einem ersten Sensor (3, 7) zum Erfassen einer zeitlichen Abfolge (26) von Messwerten (27),
einem in einem Abstand zum ersten Sensor (3, 7) angeordneten zweiten Sensor (8, 12) zum Erfassen einer zeitlichen Abfolge (31) von Messwerten (32) und Detektionsmitteln (19) zum Detektieren der Parklücke (20) anhand der Messwerte (27, 32) zumindest eines der Sensoren (3, 7, 8, 12), wobei als Sensoren (3.7, 8, 12) Ultraschallsensoren verwendet werden,
wobei für die Detektion der Parklücke (20) die Messwerte (27) des ersten Sensors (3, 7) und die Messwerte (32) des zweiten Sensors (8, 12) redundant erfassbar sind und das Parkhilfesystem (2) Prüfmittel (19) aufweist, welche anhand der Messwerte (32) des zweiten Sensors (8, 12) die zeitliche Abfolge (26) der Messwerte (27) des ersten Sensors (3, 7) auf ihre Plausibilität hin überprüfen,
**dadurch gekennzeichnet, dass**
für die Plausibilitätsprüfung die Messwerte (27) der Abfolge (26) des ersten Sensors (3, 7) entsprechenden Messwerten (32) der Abfolge (31) des zweiten Sensors (8, 12) paarweise zugeordnet werden, so dass die einander zugeordneten Messwerte (27, 32) sich auf ein und denselben Raumpunkt beziehen.

9. Kraftfahrzeug (1) mit einem Parkhilfesystem (2) nach Anspruch 8.

## Claims

1. Method for detecting a parking space (20) by means of a parking assistance system (2) of a motor vehicle (1) while the motor vehicle (1) is travelling past the parking space (20), having the steps:
acquiring a time sequence (26) of measured values (27) by means of a first sensor (3, 7) of the parking assistance system (2) while the vehicle is travelling past, acquiring a time sequence (31) of measured values (32) by means of a second sensor (8, 12), arranged at a distance from the first sensor (3, 7), of the parking assistance system (2) while the vehicle is travelling past, and detecting the parking space (20) on the basis of the measured values (27, 32) of at least one of the sensors (3, 7, 8, 12), wherein ultrasonic sensors are used as sensors (3.7, 8, 12),
wherein
for the detection of the parking space (20) the measured values (27) of the first sensor (3, 7) and the measured values (32) of the second sensor (8, 12) are acquired redundantly, and the plausibility of the time sequence (26) of the measured values (27) of the first sensor (3, 7) is checked on the basis of the measured values (32) of the second sensor (8, 12),
**characterized in that**
for the plausibility checking the measured values (27) of the sequence (26) of the first sensor (3, 7) are assigned in pairs to corresponding measured values (32) of the sequence (31) of the second sensor (8, 12), with the result that the measured values (27, 32) which are assigned to one another relate to one and the same spatial point.

2. Method according to Claim 1,
**characterized in that**
a front sensor (3, 7) which is arranged in a front region of the motor vehicle (1), in particular on a side (16), is used as a first sensor.

3. Method according to Claim 1 or 2,
**characterized in that**
a rear sensor (8, 12), which is arranged in a rear region of the motor vehicle (1), in particular on a side (16), is used as a second sensor.

4. Method according to one of the preceding claims,
**characterized in that**
the measured values (27, 32) are assigned as a function of a distance between the sensors (7, 12 and 3, 8 respectively) in the longitudinal direction of the vehicle and/or as a function of a distance covered while the vehicle is travelling past.

5. Method according to one of the preceding claims,
**characterized in that**
measured values (32) from the time sequence (31) of the second sensor (8, 12) are added to the time sequence (26) of the measured values (27) of the first sensor (3, 7).

6. Method according to one of the preceding claims,
**characterized in that**
when a measured value (27) is missing from the sequence (26) of the first sensor (3, 7), it is checked whether a corresponding measured value (32) has been acquired in the sequence (31) of the second sensor (8, 12), and:
when the corresponding measured value (32) is missing from the sequence (31) of the second sensor (8, 12), the sequence (26) of the first sensor (3, 7) is assumed to be plausible, and when the corresponding measured value (32) is present in the sequence (31) of the second sensor (8, 12), this measured value (32) is added to the sequence (26) of the first sensor (3, 7).

7. Method according to one of the preceding claims,
**characterized in that**
the detection of the parking space (20) includes the parking space (20) being measured, in particular a length and/or a width of the parking space (20) being determined on the basis of the measured values (27, 32).

8. Parking assistance system (2) for a motor vehicle (1), for detecting a parking space (20) while the motor vehicle (1) is travelling past the parking space (20), having:
a first sensor (3, 7) for acquiring a time sequence (26) of measured values (27),
a second sensor (8, 12), arranged at a distance from the first sensor (3, 7), for acquiring a time sequence (31) of measured values (32) and detection means (19) for detecting the parking space (20) on the basis of the measured values (27, 32) of at least one of the sensors (3, 7, 8, 12), wherein ultrasonic sensors are used as sensors (3.7, 8, 12),
wherein
for the detection of the parking space (20) the measured values (27) of the first sensor (3, 7) and the measured values (32) of the second sensor (8, 12) are acquired redundantly, and the parking assistance system (2) has testing means (19) which check the plausibility of the time sequence (26) of the measured values (27) of the first sensor (3, 7) on the basis of the measured values (32) of the second sensor (8, 12),
**characterized in that**
for the plausibility checking the measured values (27) of the sequence (26) of the first sensor (3, 7) are assigned in pairs to corresponding measured values (32) of the sequence (31) of the second sensor (8, 12), with the result that the measured values (27, 32) which are assigned to one another relate to one and the same spatial point.

9. Motor vehicle (1) having a parking assistance system (2) according to Claim 8.

## Revendications

1. Procédé destiné à détecter une place de stationnement (20) au moyen d'un système d'aide au stationnement (2) d'un véhicule automobile (1) pendant un passage du véhicule automobile (1) devant la place de stationnement (20), comprenant les étapes suivantes :
détection d'une séquence (26) temporelle de valeurs de mesure (27) par un premier capteur (3, 7) du système d'aide au stationnement (2) pendant le passage, détection d'une séquence (31) temporelle de valeurs de mesure (32) par un deuxième capteur (8, 12) placé à un écart du premier capteur (3, 7) du système d'aide au stationnement (2) pendant le passage et
détection de la place de stationnement (20) à l'aide des valeurs de mesure (27, 32) d'au moins l'un des capteurs (3, 7, 8, 12), en tant que capteurs (3.7, 8, 12) étant utilisés des capteurs à ultrasons,
pour la détection de la place de stationnement (20), les valeurs de mesure (27) du premier capteur (3, 7) et les valeurs de mesure (32) du deuxième capteur (8, 12) étant détectées de manière redondante et à l'aide des valeurs de mesure (32) du deuxième capteur (8, 12), la séquence temporelle (26) des valeurs de mesure (27) du premier capteur (3, 7) étant contrôlée au niveau de sa plausibilité,
**caractérisé en ce que**
pour le contrôle de plausibilité, les valeurs de mesure (27) de la séquence (26) du premier capteur (3, 7) sont affectées par paires à des valeurs de mesure (32) correspondantes de la séquence (31) du deuxième capteur (8, 12), de sorte que les valeurs de mesure (27, 32) mutuellement affectées se rapportent à un seul et même point dans l'espace.

2. Procédé selon la revendication 1,
**caractérisé en ce**
**qu'**en tant que premier capteur, on utilise un capteur (3, 7) avant, lequel est placé dans une zone avant du véhicule automobile (1), notamment sur un flanc latéral (16).

3. Procédé selon la revendication 1 ou la revendication 2,
**caractérisé en ce**
**qu'**en tant que deuxième capteur, on utilise un capteur (8, 12) arrière, lequel est placé dans une zone arrière du véhicule automobile (1), notamment sur un flanc latéral (16).

4. Procédé selon l'une quelconque des revendications précédentes,
**caractérisé en ce que**
l'affectation des valeurs de mesure (27, 32) s'effectue en fonction d'un écart entre les capteurs (7, 12 ou 3, 8) dans la direction longitudinale du véhicule et/ou en fonction d'un trajet parcouru lors du passage.

5. Procédé selon l'une quelconque des revendications précédentes,
**caractérisé en ce que**
la séquence temporelle (26) des valeurs de mesure (27) du premier capteur (3, 7) est complétée par des valeurs de mesure (32) issues de la séquence temporelle (31) du deuxième capteur (8, 12).

6. Procédé selon l'une quelconque des revendications précédentes,
**caractérisé en ce**
**qu'**à défaut d'une valeur de mesure (27) dans la séquence (26) du premier capteur (3, 7), il est vérifié si dans la séquence (31) du deuxième capteur (8, 12) a été détectée une valeur de mesure (32) correspondante et :
à défaut de la valeur de mesure (32) correspondante dans la séquence (31) du deuxième capteur (8, 12), la séquence (26) du premier capteur (3, 7) est supposée plausible et
en présence de la valeur de mesure (32) correspondante dans la séquence (31) du deuxième capteur (8, 12), la séquence (26) du premier capteur (3, 7) est complétée avec ladite valeur de mesure (32).

7. Procédé selon l'une quelconque des revendications précédentes,
**caractérisé en ce que**
la détection de la place de stationnement (20) englobe que la place de stationnement (20) est arpentée, notamment une longueur et/ou une largeur de la place de stationnement (20) est déterminée à l'aide des valeurs de mesure (27, 32).

8. Système d'aide au stationnement (2) pour un véhicule automobile (1) destiné à détecter une place de stationnement (20) pendant un passage du véhicule automobile (1) devant la place de stationnement (20), avec :
un premier capteur (3, 7) destiné à détecter une séquence temporelle (26) de valeurs de mesure (27),
un deuxième capteur (8, 12) placé avec un écart par rapport au premier capteur (3, 7), destiné à détecter une séquence temporelle (31) de valeurs de mesure (32) et des moyens de détection (19), destinés à détecter la place de stationnement (20), à l'aide des valeurs de mesure (27, 32) d'au moins l'un des capteurs (3, 7, 8, 12), en tant que capteurs (3.7, 8, 12) étant utilisés des capteurs à ultrasons,
pour la détection de la place de stationnement (20), les valeurs de mesure (27) du premier capteur (3, 7) et les valeurs de mesure (32) du deuxième capteur (8, 12) étant détectables de manière redondante et le système d'aide au stationnement (2) comportant des moyens de contrôle (19), lesquels à l'aide des valeurs de mesure (32) du deuxième capteur (8, 12) contrôlent la séquence temporelle 26) des valeurs de mesure (27) du premier capteur (3, 7) au niveau de sa plausibilité,
**caractérisé en ce que**
pour le contrôle de plausibilité, les valeurs de mesure (27) de la séquence (26) du premier capteur (3, 7) sont affectées par paires à des valeurs de mesure (32) correspondantes de la séquence (31) du deuxième capteur (8, 12), de sorte que les valeurs de mesure (27, 32) mutuellement affectées se rapportent à un seul et même point dans l'espace.

9. Véhicule automobile (1) avec un système d'aide au stationnement (2) selon la revendication 8.
